# EUROPÄISCHE PATENTANMELDUNG

(11) **EP 2 772 331 A1**
(43) Veröffentlichungstag der Anmeldung: **03.09.2014**
(21) Anmeldenummer: 13157141.6
(22) Anmeldetag: 28.02.2013
(51) Int. Cl.: B23K 11/00, B23K 11/093, B23K 11/14, B23P 6/00, F01D 5/20

(54) **Ein Stopfen, ein Verfahren zum Verschließen eines Loches durch einen solchen Stopfen, sowie die Herstellung eines solchen Stopfens**

(71) Anmelder: Siemens Aktiengesellschaft, 80333 München (DE)
(72) Erfinder: Burbaum, Bernd, 14612 Falkensee (DE); Melzer-Jokisch, Torsten, 15366 Neuenhagen bei Berlin (DE)

(57) **Zusammenfassung**

Die Erfindung betrifft einen Stopfen (3) aus einem Grundwerkstoff zum Verschließen eines Lochs (2) in einem Bauteil aus einem Grundwerkstoff mittels Schweißen unter Verwendung von Druck und Wärme, wobei der Stopfen (3) eine Stopfenoberseite (10) und eine Stopfenunterseite (11) und dazwischen eine seitliche Umfangsfläche aufweist, wobei die seitliche Umfangsfläche zwischen Stopfenoberseite (10) und Stopfenunterseite (11) in einem stumpfen Winkel zur Stopfenunterseite (11) verläuft, wobei über die seitliche Umfangsfläche mehrere Halbkegel (4) mit einer Halbkegelgrundfläche (5), einer Halbkegelmantelfläche (7) und einer Halbkegelspitze (6) ausgebildet sind, welche sich von der Stopfenoberseite (10) zur Stopfenunterseite (11) erstreckt, wobei die Halbkegelspitze (6) im Bereich der Stopfenunterseite (11) und die Halbkegelgrundfläche (5) im Bereich der Stopfenoberseite (10) abschließt, so dass während eines Schweißprozesses der Grundwerkstoff des Stopfens (3) nichtlinear in den Grundwerkstoff des Bauteils einbringbar ist.

Weiterhin betrifft die Erfindung ein Verfahren zum Verschließen eines Loches durch den Stopfen, sowie die Herstellung eines solchen Stopfens.

## Beschreibung

Die Erfindung betrifft einen Stopfen, ein Verfahren zum Verschließen eines Loches in einem Bauteil durch einen solchen Stopfen, sowie die Herstellung eines solchen Stopfens.

Bei Gussteilen zur Herstellung von hohlen Bauteilen gibt es oft fertigungsbedingte Löcher, die wieder verschlossen werden sollen. Bisher wurden die Löcher mittels eines Stopfens, der durch Widerstandsschweißen in das Loch eingebracht wurde, geschlossen. Dies ist beispielsweise in der EP 2 340 909 A1 der Fall. Diese Stopfen weisen entweder eine vollumfängliche Oberfläche oder weisen eng beieinander liegende Rillen auf.

Das Schweißen insbesondere das Widerstandspunktschweißen von ausscheidungshärtbaren Nickelbasis-Superlegierungen mit hohem Gehalt an härtender γ'-Phase ist jedoch z.B. wegen der Reckalterungsrissbildung schwierig. Speziell, wenn der Stopfen und das zu verschließende Bauteil einen hohen Gehalt an härtender γ'-Phase aufweisen, können die zu fügenden Flächengrößen aufgrund der Kräfte limitiert sein.

Bislang wird Widerstandspressschweißen nur für das Fügen von Nickelbasis-Superlegierungen eingesetzt, bei denen nur der Stopfen bzw. das Bauteil einen hohen Gehalt an härtender γ'-Phase enthält. Ein Widerstandspressschweißen von Fügepartnern von denen jeweils beide einen hohen Gehalt an härtender γ'-Phase aufweisen, ist bislang nicht hinreichend untersucht.

Eine erste Aufgabe der Erfindung ist daher die Angabe eines Stopfens, welcher das oben genannte Problem löst. Eine zweite Aufgabe ist die Angabe eines Verfahrens zum Verschließen eines Loches, welches das oben genannte Problem löst. Eine dritte Aufgabe der Erfindung ist die Angabe eines Herstellungsverfahrens für einen solchen Stopfen.

Erfindungsgemäß wird die erste Aufgabe mit der Angabe eines Stopfens aus einem Grundwerkstoff gemäß dem Oberbegriff des Anspruchs 1 durch die folgenden Merkmale gelöst, wobei: über eine seitliche Umfangsfläche mehrere Halbkegel mit einer Halbkegelgrundfläche, einer Halbkegelmantelfläche und einer Halbkegelspitze ausgebildet sind, welche sich von einer Stopfenoberseite zu einer Stopfenunterseite erstreckt, wobei die Halbkegelspitze im Bereich der Stopfenunterseite und die Halbkegelgrundfläche im Bereich der Stopfenoberseite abschließt, so dass während eines Schweißprozesses der Grundwerkstoff des Stopfens nichtlinear in einen Grundwerkstoff eines Bauteils einbringbar ist.

Durch das derartige Profilieren des Stopfens wird eine minimierte und definierte Energieeinbringung in den Stopfen bzw. den Grundwerkstoff des Stopfens und in die Lochinnenwand bzw. den Grundwerkstoff der Lochinnenwand erzielt, da sich während des Fügeprozesses nicht der gesamte Umfang des Stopfens in Kontakt mit der Lochinnenwand befindet und damit von Strom durchflossen wird. Der Schweißprozess ist so zu steuern, dass durch Strom und Kraftaufbringung ein minimaler Bereich mit schmelzflüssiger Phase um den gesamten Umfang erzielt wird, so dass Heißrisse vermieden werden. Während des Schweißprozesses wird der Grundwerkstoff des Stopfens in den Grundwerkstoff des Bauteils verbracht. Alle bisherigen Stopfen des Stands der Technik, insbesondere der EP 2 340 909 A1, erhöhten die Verschmelzungsfläche während des Einbringens linear. Der erfindungsgemäße Stopfen jedoch erhöht die Verschmelzungsfläche nichtlinear, so dass verbesserte Schweiß-/Schmelzqualitäten erzeugt werden. Dabei ist die nichtlineare Erhöhung der Verschmelzungsfläche bevorzugt eine exponentiell Erhöhung der Verschmelzungsfläche. Durch den erfindungsgemäßen Stopfen ist es möglich, zwei Bauteile nämlich den Stopfen und das zu verschließende Bauteil, die einen hohen Gehalt an γ'-Phase aufweisen, ohne Risse zu verschmelzen, das heißt zu verbinden.

Bevorzugt umfasst die seitliche Umfangsfläche zwischen den mehreren Halbkegelmantelflächen als auch zwischen den mehreren Halbkegelspitzen eine zum Stopfeninneren weisende Wölbung. Dadurch wird vermieden, dass der Stopfen während des Fügeprozesses zu schnell oder überhaupt an der Lochinnenwand anliegt. Zudem kann die entstehende Schmelze dort hineinlaufen und zur Verbindung beitragen.

In bevorzugter Ausgestaltung weisen der Stopfen als auch das Bauteil einen artähnlichen oder artgleichen Grundwerkstoff auf. Zudem umfasst der Stopfen bevorzugt als einen Grundwerkstoff eine Nickelbasis-Superlegierung mit einem hohen Gehalt, insbesondere 30 - 40 % von dem Grundwerkstoff, an γ'-Phase. Auch das zu stopfende Bauteil umfasst als einen Grundwerkstoff eine Nickelbasis-Superlegierung mit einem hohen Gehalt, insbesondere 30 - 40 % von dem Grundwerkstoff, an γ'-Phase. Diese Legierung ist besonders gut für den Einsatz in Gasturbinen geeignet, z.B. als Turbinenschaufel.

Bevorzugt grenzen die mehrere Halbkegelgrundflächen an der Stopfenoberseite direkt aneinander an. Es können auch alle Halbkegelgrundflächen an der Stopfenoberseite direkt aneinander angrenzen.

Bevorzugt beträgt die Stopfenhöhe ca. 3mm. Dadurch ist eine schnelle Fertigung des Stopfens möglich. Bevorzugt weist die Stopfenoberseite einen Stopfenoberseitenumfang auf und die Stopfenunterseite einen Stopfenunterseitenumfang und wobei der Stopfenunterseitenumfang lediglich 50 - 60 % des Stopfenoberseitenumfangs beträgt. Dadurch verläuft die seitliche Umfangsfläche zwischen Stopfenoberseite und Stopfenunterseite unter einem stumpfen Winkel zur Stopfenunterseite. So kann z.B. der Stopfenoberseitenumfang 5 - 6 mm betragen und der Stopfenunterseitenumfang 3 mm.

Erfindungsgemäß wird die zweite Aufgabe mit der Angabe eines Verfahrens zum Verschließen eines Loches umfassend eine Lochinnenwand und eine Lochoberflächenebene in einem Bauteil aus einem Grundwerkstoff durch den oben beschriebenen Stopfen aus einem Grundwerkstoff mit mehreren Halbkegelmantelflächen, mit den folgenden Schritten gelöst:
- Einbringen des Stopfens in das Loch, so dass die Halbkegelmantelflächen mit der Lochinnenwand eine sich nur teilweise berührende Fläche ausbildet,
- Schweißen unter der Anwendung von Wärme und Druck des Bauteils mit dem Stopfen, so dass während des Schweißprozesses der Grundwerkstoff des Stopfens nichtlinear, insbesondere exponentiell in den Grundwerkstoff des Bauteils eingebracht wird.

Die Halbkegelmantelflächen bilden mit dem Lochinneren lediglich einen minimalen Bereich schmelzflüssiger Phase aus. Durch die Ausbildung eines minimalen Bereichs schmelzflüssiger Phase wird die Heißrissneigung minimiert. Während des Schweißprozesses wird der Grundwerkstoff des Stopfens in den Grundwerkstoff des Bauteils eingebracht. Die Verschmelzungsfläche wird nichtlinear, insbesondere exponentiell erhöht, so dass verbesserte Schweiß-/Schmelzqualitäten erzeugt werden. Wenn der Stopfen als auch das Bauteil vorgewärmt sind, können zudem um die Umfangsseite größere Flächen aufgeschmolzen werden, was ebenfalls zu einer Verringerung der Rissbildung führt.

Bevorzugt wird das Schweißen unter der Anwendung von Wärme und Druck als ein Widerstandsschweißen, insbesondere als Widerstandspunktschweißen oder Buckelschweißen durchgeführt. Beim Widerstandsschweißen werden die zu verbindenden Bauteile zusammengepresst und an der Kontaktstelle zwischen den Bauteilen durch den Schweißstrom elektrisch aufgeschmolzen. Selbstverständlich können auch andere Schweißverfahren in Betracht gezogen werden.

Erfindungsgemäß wird die dritte Aufgabe mit der Angabe eines Herstellungsverfahrens eines oben beschriebenen Stopfens gelöst, wobei der Stopfen durch ein generatives Verfahren, insbesondere durch Selektives Laserschmelzen, herstellbar ist. Dieses zeichnet sich durch eine Geometriefreiheit des Stopfens bei gleichzeitiger großer Bauteildichte aus. Auch entstehen bei diesem Verfahren keine oder wenig Lunker. Da Werkzeuge oder Formen entfallen, ist eine hohe Zeitersparnis möglich.

Weitere Merkmale, Eigenschaften und Vorteile der vorliegenden Erfindung ergeben sich aus der nachfolgenden Beschreibung unter Bezugnahme auf die beiliegenden Figuren. Darin zeigt schematisch:
- FIG 1:: eine Spitze einer Turbinenschaufel 1 nach dem Stand der Technik mit fertigungstechnisch bedingtem Loch,
- FIG 2:: einen erfindungsgemäßen dreidimensionalen Stopfen 3,
- FIG 3:: zeigt die Ansicht eines erfindungsgemäßen Stopfens 3 von der Seite.

Bauteile in Gasturbinen-Triebwerken, werden während ihres Betriebs sehr hohen Temperaturen und mechanischen Kräften ausgesetzt. Um einen solchen Betrieb zu ermöglichen, wurden Hochtemperatur-Superlegierungen auf Nickelbasis mit hohem Gehalt an γ'-Phase (Gamma-Strich-Phase) entwickelt, um z.B. eine oder mehrere verbesserte Eigenschaften zu bieten, wie mechanische Eigenschaften, Beständigkeit gegenüber den hohen Temperaturen, Verschleißbeständigkeit, verbesserte Oxidationsbeständigkeit usw..

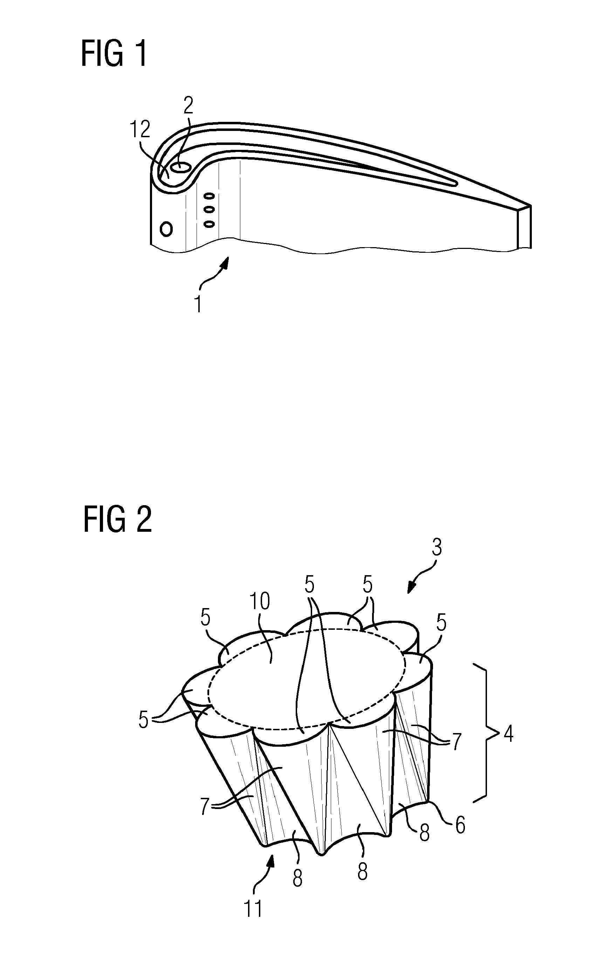

FIG 1 zeigt beispielhaft als ein solches Bauteil eine Spitze einer Turbinenschaufel 1, welche als Grundwerkstoff eine Nickelbasis-Superlegierung umfasst. Dies kann beispielsweise eine Nickelbasis-Superlegierung mit einem hohen Gehalt, insbesondere 30 - 40 % von dem Grundwerkstoff, an γ'-Phase sein.

Dabei weist die Schaufelspitze ein zu verschließendes Loch 2 auf, das mittels eines erfindungsgemäßen Stopfens 3 (FIG 2) verschlossen werden soll. Auch der erfindungsgemäße Stopfen 3 (FIG 2) umfasst als Grundwerkstoff eine Nickelbasis-Superlegierung mit einem hohen Gehalt an γ'-Phase. Die derzeitige Schweißtemperatur, von Gegenständen, die aus Superlegierung auf Nickelbasis mit hohem Gehalt an γ'-Phase hergestellt sind, können zu einem Reißen des Gegenstandes führen. Nickelbasis-Superlegierungen, die einen hohen Gehalt an γ'-Phase enthalten, sind nämlich dafür bekannt, dass sie während des Schweißens oder während der nach dem Schweißen ausgeführten Wärmebehandlung zu einem Mikro- und/oder Makroreißen neigen. Es wird angenommen, dass ein Dehnungsalterungsreißen die Hauptursache eines solchen Reißens ist. Dieses Problem wird nun mit einem erfindungsgemäßen Stopfen 3 gelöst.

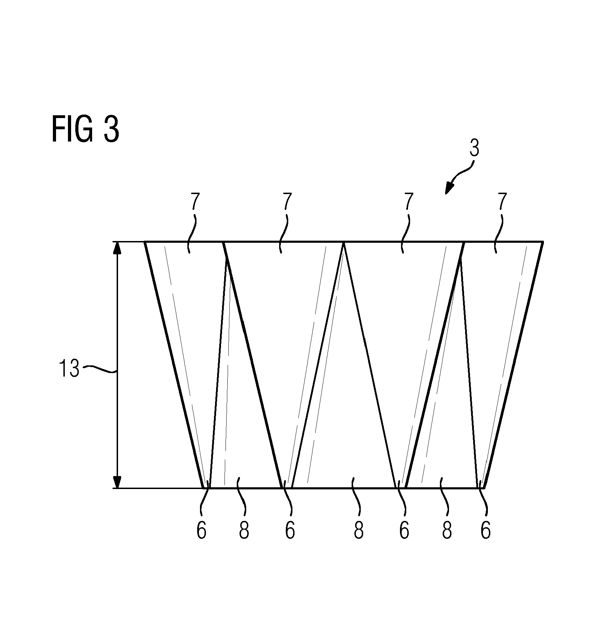

FIG. 2 zeigt den erfindungsgemäßen Stopfen 3 aus einem Grundwerkstoff im Detail. Selbstverständlich kann der erfindungsgemäße Stopfen 3 auch für jedes andere Bauteil aus einem Grundwerkstoff mit Loch 2 verwendet werden. Dabei weist das Loch 2 eine Lochinnenwand und eine Lochoberflächenebene 12 auf. Der Stopfen 3 weist eine Stopfenoberseite 10 und eine Stopfenunterseite 11 und dazwischen eine seitliche Umfangsfläche auf, wobei die seitliche Umfangsfläche zwischen Stopfenoberseite 10 und Stopfenunterseite 11 unter einem stumpfen Winkel zur Stopfenunterseite 11 verläuft. Beispielsweise heißt das, dass die Stopfenoberseite 10 einen Stopfenoberseitenumfang aufweist und die Stopfenunterseite 11 einen Stopfenunterseitenumfang und dass der Stopfenunterseitenumfang lediglich 50 - 60 % des Stopfenoberseitenumfangs betragen kann. So kann z.B. der Stopfenoberseitenumfang eine Größe von 5 - 6 mm haben, und der Stopfenunterseitenumfang eine Größe von 3 mm haben, wobei die Stopfenhöhe 13 (FIG 3) 3 mm beträgt.

Über die gesamte seitliche Umfangsfläche sind nun Halbkegel 4 mit einer Halbkegelgrundfläche 5 und einer Halbkegelmantelfläche 7 und einer Halbkegelspitze 6 angeordnet. Dabei erstrecken sich die Halbkegel 4 von der Stopfenoberseite 10 zur Stopfenunterseite, wobei die Halbkegelspitze 6 mit der Stopfenunterseite 11 und die Halbkegelgrundfläche 5 mit der Stopfenoberseite 10 abschließt. Die seitliche Umfangsfläche zwischen den Halbkegelmantelflächen 7 und den Halbkegelspitzen 6 weist eine zum Stopfeninneren weisende Wölbung 8 auf.

Zum Verschließen des Lochs 2 wird der Stopfen 3 nun in das Loch 2 eingebracht und zwar so, dass die Halbkegelmantelfläche 7 mit der Lochinnenwand eine sich nur teilweise berührende Fläche ausbildet. Das heißt, dass der Stopfen 3 bzw. die Umfangsseite des Stopfens 3 nicht überall die Lochinnenwand berührt. Die Halbkegelmantelflächen 7 bilden mit dem Lochinneren lediglich einen minimalen Bereich schmelzflüssiger Phase aus.
Der Stopfen 3 wird so eingebracht, dass zwischen der Lochoberflächenebene 12 und der Stopfenoberseite 10 ein großer Stopfenüberstand ausgebildet wird. Anschließend werden Bauteil und Stopfen 3 zusammengeschweißt. Hierzu eignet sich beispielsweise das Widerstandspunktschweißen oder Buckelschweißen unter Verwendung von Druck und Wärme, da diese Schweißverfahren automatisiert anwendbar und sehr schnell sind. Das Widerstandspunktschweißen ist ein Schweißverfahren für elektrisch leitfähige Werkstoffe auf Basis der Jouleschen Stromwärme eines durch die Verbindungsstelle fließenden elektrischen Stromes. Beim Widerstandspunktschweißen werden daher die zu verbindenden Werkstücke aneinander gepresst und von einem großen Strom durchflossen. An der Verbindungsstelle wird das Metall auf Schmelztemperatur erwärmt.

Beim Widerstandspressschweißen des Stopfens 3 mit dem Bauteil wird die Energieeinbringung in den Grundwerkstoff des Bauteils und in den Grundwerkstoff des Stopfens 3 durch die Ausgestaltung der Halbkegel 4 an der seitlichen Umfangsfläche des Stopfens 3 sowie der Wölbungen 8 minimiert, da sich während des Fügeprozesses nicht die gesamte Umfangsseite des Stopfens 3 in Kontakt mit dem Grundwerkstoff des Lochinneren befindet und damit von Strom durchflossen wird. Während des Schweißprozesses wird der Grundwerkstoff des Stopfens 3 in den Grundwerkstoff des Bauteils eingebracht. Alle bisherigen Stopfen des Stands der Technik erhöhten die Verschmelzungsfläche während des Einbringens linear. Der hier gezeigte Stopfen 2 erhöht die Verschmelzungsfläche jedoch exponentiell, so dass verbesserte Schweiß-/ Schmelzqualitäten erzeugt werden. Der Schweißprozess ist so zu steuern, dass durch Strom und Kraftaufbringung ein minimaler Bereich mit schmelzflüssiger Phase um die gesamte Umfangsseite des Stopfens 3 erzielt wird, so dass Heißrisse vermieden werden. Entstehende Schweißwulste können in die Wölbungen 8 abfließen. Durch einen derart profilierten Stopfen 3 kann die Berührungsfläche zwischen der Umfangsseite des Stopfens und dem Lochinneren mit zunehmender Zeit während des Schmelzens zunehmen. Das heißt, dass ein Großteil der zu schweißenden Fläche auch erst bei einer geeigneten Schweißtemperatur aufeinandertrifft. Dies kann einer Versprödung und einem Zerspringen vorbeugen, wie dies auftreten kann, wenn der Schweißvorgang in dem an den geschweißten Bereich angrenzenden Abschnitt bei einer relativ niedrigen Temperatur durchgeführt wird. Ein artgleiches Fügen von Nickelbasis-Superlegierung mit hohem Gehalt an γ'-Phase kann somit gewährleistet werden.
Außerdem wird der Stopfenüberstand lediglich zu einem geringen Teil in das Loch 2 eingeschweißt, so dass lediglich der obere Teil des Loches 2 verschlossen wird. Durch die Ausbildung des Stopfens ist ein Einsetzen des Stopfens, so dass ein Überstand entsteht, in das Loch 2 problemlos möglich. Der Überstand ist aus schweißtechnischen Gründen unabdingbar, da durch Druck und Wärme geschweißt wird und der Stopfen 3 dabei in das Loch 2 eingeschweißt wird.

Durch den erfindungsgemäßen Stopfen 3 und das erfindungsgemäße Verfahren ist eine Minimierung der Energieeinbringung, sowie eine Vermeidung von Heißrissen und ein artgleiches Fügen von Nickelbasis-Superlegierung mit großem Gehalt an γ'-Phase möglich.

Ein erfindungsgemäßer Stopfen 3 kann durch ein generatives Verfahren z.B. Selektives Laserschmelzen, SLM (Selective Laser Melting) aufgebaut werden, da dieses eine Geometriefreiheit des Stopfens bei gleichzeitig großer Bauteildichte aus. Auch andere formlose Fertigungsverfahren sind denkbar.

## Patentansprüche

1. Stopfen (3) aus einem Grundwerkstoff zum Verschließen eines Lochs (2) in einem Bauteil aus einem Grundwerkstoff mittels Schweißen unter Verwendung von Druck und Wärme, wobei der Stopfen (3) eine Stopfenoberseite (10) und eine Stopfenunterseite (11) und dazwischen eine seitliche Umfangsfläche aufweist, wobei die seitliche Umfangsfläche zwischen Stopfenoberseite (10) und Stopfenunterseite (11) in einem stumpfen Winkel zur Stopfenunterseite (11) verläuft
**dadurch gekennzeichnet, dass** über die seitliche Umfangsfläche mehrere Halbkegel (4) mit einer Halbkegelgrundfläche (5), einer Halbkegelmantelfläche (7) und einer Halbkegelspitze (6) ausgebildet sind, welche sich von der Stopfenoberseite (10) zur Stopfenunterseite (11) erstrecken, wobei die Halbkegelspitze (6) in Bereich der Stopfenunterseite (11) und die Halbkegelgrundfläche (5) im Bereich der Stopfenoberseite (10) abschließt, so dass während des Schweißprozesses der Grundwerkstoff des Stopfens (3) nichtlinear in den Grundwerkstoff des Bauteils einbringbar ist.

2. Stopfen nach Anspruch 1,
**dadurch gekennzeichnet, dass** während des Schweißprozesses der Grundwerkstoff des Stopfens (3) exponentiell in den Grundwerkstoff des Bauteils einbringbar ist.

3. Stopfen nach Anspruch 1 oder 2,
**dadurch gekennzeichnet, dass** zwischen den mehreren Halbkegelmantelflächen (7) als auch zwischen den mehreren Halbkegelspitzen (6) die seitliche Umfangsfläche eine zum Stopfeninneren weisende Wölbung (8) umfasst.

4. Stopfen nach einem der vorhergehenden Ansprüche,
**dadurch gekennzeichnet, dass** der Stopfen (3) als auch das Bauteil einen artähnlichen oder artgleichen Grundwerkstoff aufweisen.

5. Stopfen nach einem der Ansprüche 1 bis 4,
**dadurch gekennzeichnet, dass** der Stopfen als einen Grundwerkstoff eine Nickelbasis-Superlegierung umfasst mit einem hohen Gehalt, insbesondere 30 - 40 % von dem Grundwerkstoff, an γ'-Phase.

6. Stopfen nach einem der Ansprüche 1 bis 5,
**dadurch gekennzeichnet, dass** das zu stopfende Bauteil als einen Grundwerkstoff eine Nickelbasis-Superlegierung umfasst mit einem hohen Gehalt, insbesondere 30 - 40 % von dem Grundwerkstoff, an γ'-Phase.

7. Stopfen nach einem der Ansprüche 1 bis 6,
**dadurch gekennzeichnet, dass** die mehrere Halbkegelgrundflächen (5) an der Stopfenoberseite (10) direkt aneinander angrenzen.

8. Stopfen nach einem der Ansprüche 1 bis 7,
**dadurch gekennzeichnet, dass** die Stopfenhöhe (13) ca. 3 mm beträgt.

9. Stopfen nach einem der Ansprüche 1 bis 8,
**dadurch gekennzeichnet, dass** die Stopfenoberseite (10) einen Stopfenoberseitenumfang aufweist und die Stopfenunterseite (11) einen Stopfenunterseitenumfang und wobei der Stopfenunterseitenumfang lediglich 50 - 60 % des Stopfenoberseitenumfangs beträgt.

10. Verfahren zum Verschließen eines Loches, umfassend eine Lochinnenwand und eine Lochoberflächenebene (12), in einem Bauteil aus einem Grundwerkstoff durch einen Stopfen (3) aus einem Grundwerkstoff mit mehreren Halbkegelmantelflächen (7) nach einem der Ansprüche 1 bis 9,
**gekennzeichnet durch**
folgende Schritte:
- Einbringen des Stopfens (3) in das Loch (2), so dass die Halbkegelmantelflächen (7) mit der Lochinnenwand eine sich nur teilweise berührende Fläche ausbildet,
- Schweißen unter der Anwendung von Wärme und Druck des Bauteils mit dem Stopfen (3), so dass während des Schweißprozesses der Grundwerkstoff des Stopfens (3) nichtlinear, insbesondere exponentiell, in den Grundwerkstoff des Bauteils eingebracht wird.

11. Verfahren zum Verschließen eines Loches nach Anspruch 10,
**dadurch gekennzeichnet, dass** das Schweißen unter der Anwendung von Wärme und Druck als ein Widerstandsschweißen insbesondere als Widerstandspunktschweißen oder Buckelschweißen durchgeführt wird.

12. Herstellungsverfahren für einen Stopfen nach einem der Ansprüche 1 bis 9,
**dadurch gekennzeichnet, dass** der Stopfen (3) durch ein generatives Verfahren, insbesondere durch Selektives Laserschmelzen (SLM), herstellbar ist.
